# EUROPÄISCHE PATENTANMELDUNG

(11) **EP 1 111 255 A2**
(43) Veröffentlichungstag der Anmeldung: **27.06.2001**
(21) Anmeldenummer: 00127855.5
(22) Anmeldetag: 20.12.2000
(51) Int. Cl.: F16B 37/12

(54) **Gewindeeinsatz-Anordnung**

(30) Priorität: 24.12.1999 DE 29922799 U
(71) Anmelder: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(57) **Zusammenfassung**

Gewindeeinsatz-Anordnung mit einem hohlzylinderförmigen Hülsenteil (2) und einem darin angeordneten hohlzylinderförmigen Gewindeeinsatz (1) mit Innengewinde. An einer Öffnung des Gewindeeinsatzes sind ein auswärts weisendes Auflage-Randteil bzw. mindestens drei auswärts weisende Auflage-Randteile (1-1, 1-2, 1-3, 1-4) angeordnet, für deren Aufnahme an einer Öffnung des Hülsenteils (2) entsprechende Auflage-Aussparungen (2-1, 2-2, 2-3, 2-4) vorgesehen sind. Der Gewindeeinsatz mit seinen Auflage-Randteilen ist im Bereich der Auflage-Aussparungen verdrehbar ; der Gewindeeinsatz ist innerhalb des Hülsenteils seitlich verschiebbar.

## Beschreibung

Die Erfindung betrifft eine Gewindeeinsatz- Anordnung.

Gewindeeinsatz-Anordnungen werden in Bauteile eingesetzt, um Schraubverbindungen zu ermöglichen. Das Einsetzen des eigentlichen Gewindeeinsatzes, einem hohlzylinderähnlichem Teil mit Innengewinde, erfolgt in der Bohrung einer Bauteilplatte. Der Gewindeeinsatz kann mit dem Bauteil z.B. verklebt, verstemmt, verschraubt oder vergossen sein.

Bei der Befestigung von Innenverkleidungen von Flug- und Kraftfahrzeugen werden Gewindeeinsatz-Anordnungen verwendet, die einen Toleranzausgleich und/ oder eine Zentrierung beim Herstellen der Schraubverbindung zulassen.

Derartige Gewindeeinsatz-Anordnungen bestehen grundsätzlich aus zwei Teilen:
einem Hülsenteil, welches fest mit dem Bauteil verbunden wird, und
dem eigentlichen Gewindeeinsatz,
welcher lose im Hülsenteil angeordnet ist und innerhalb desselben begrenzt verschoben bzw. verdreht werden kann.
Zur Zentrierung ist der Gewindeeinsatz mit einer Schräge versehen, die zum Innengewinde führt.

Eine solche Gewindeeinsatz-Anordnung nach dem Stand der Technik (Hersteller: Shur-Lok Corporation, USA, Bestellnr.

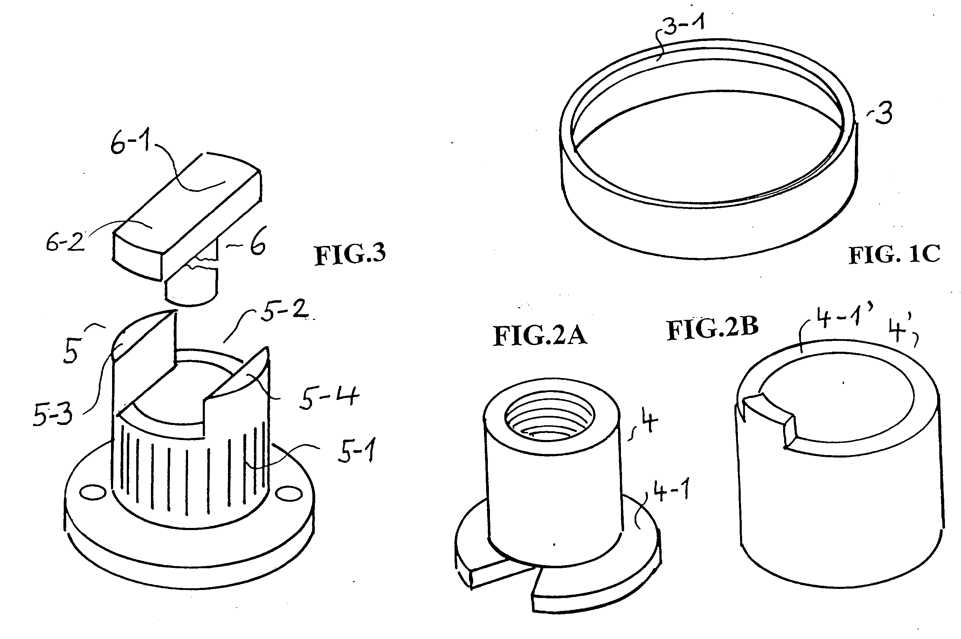

SL6065 SERIES ) ist in FIG. 3 dargestellt.
Hülsenteil 5 und Gewindeeinsatz 6 sind aus Metall hergestellt. Das Hülsenteil wird mit dem Bauteil, zumeist aus Kunststoff, verklebt und vergossen. Es weist außen Riffelungen 5-1 auf, die einem verdrehfesten Sitz dienen.
Der obere offene Hülsenrand weist eine Ausfräsung 5-2 zwischen zwei gegenüberstehenden Wandungsteilen 5-3 und 5-4 auf.

Der eigentliche Gewindeeinsatz 6 weist einen Steg mit zwei nach außen weisenden Auflage-Randteilen 6-1 und 6-2 auf. Der
Steg des Gewindeeinsatzes 6 ist in der Ausfräsung 5-2 angeordnet. Es liegt dort auf dem Hülsenrand auf und kann innerhalb der Ausfräsung begrenzt verschoben und verdreht werden. Zur Begrenzung der Verschiebung wirkt die innere Hülsenwandung wie ein Anschlag für die äußere Wandung des Innengewinde-Teils 6. Zur Begrenzung der Verdrehung wirken die Wandungsteile 5-3 und 5-4 wie ein Anschlag für den Steg.

Derartige Gewindeeinsätze weisen folgende Nachteile auf:
Insbesondere in der Flugzeugtechnik unerwünschtes hohes Gewicht wegen des aus Metall gefertigten Hülsenteils,
hohe Herstellungskosten für das aus Metall gefertigte Hülsenteil,
nur zwei Auflagestellen für den Auflagesteg auf der Hülsenwandung.

Es ist Aufgabe der Erfindung, eine Gewindeeinsatz- Anordnung vorzusehen, welche eine gleichmäßigere Verteilung der Auflageflächen auf der Hülsenwandung vorsieht.
In weiterer Ausgestaltung der Erfindung ist es Aufgabe der Erfindung, eine Gewindeeinsatz- Anordnung leichteren Gewichts vorzusehen bzw. eine Gewindeeinsatz- Anordnung mit geringerem Fertigungsaufwand vorzusehen.

Die Aufgabe der Erfindung wird in vorteilhafter Weise durch die in den Ansprüchen 1 und 7 genannten Merkmalen gelöst.

Vorteilhafte Weiterbildungen der Erfindung sind in den Unteransprüchen gekennzeichnet.

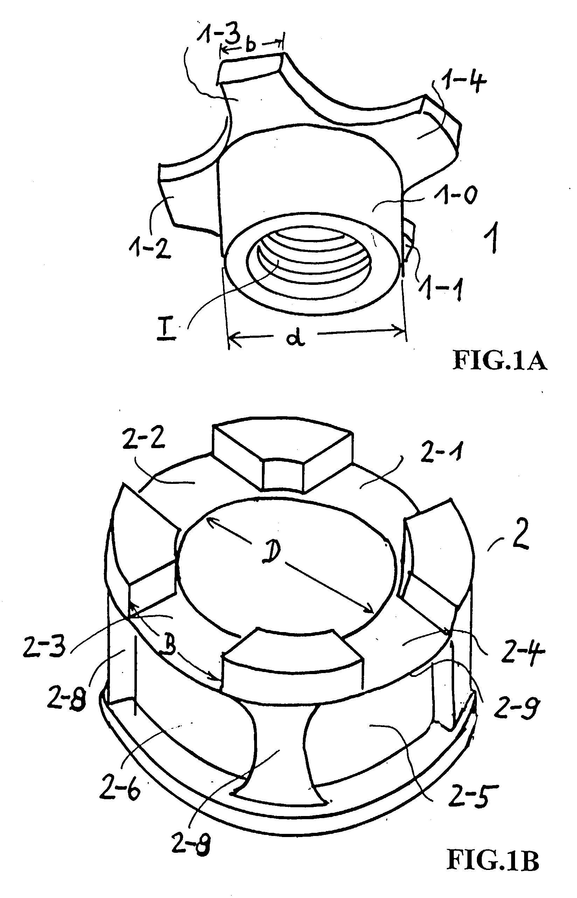

Ausführungsbeispele der Erfindung sind in den Zeichnungen dargestellt und werden im folgenden näher beschrieben. Es zeigen:
FIG.1A
   eine perspektivische Darstellung eines erfindungsgemäßen Gewindeeinsatzes mit vier strahlenförmig auswärts gerichteten Auflage-Randteilen;
FIG.1B
   eine perspektivische Darstellung eines erfindungsgemäßen Hülsenteils zur Aufnahme des Gewindeeinsatzes gemäß FIG. lA;
FIG. 1C
   eine perspektivische Darstellung einer Kappe für das Hülsenteil zur Abdeckung des Gewindeeinsatzes mit den Auflage-Randteilen;
FIG.2A
   eine perspektivische Darstellung eines erfindungsgemäßen Gewindeeinsatzes mit nur einem auswärts gerichteten Auflage-Randteil;
FIG.2B
   eine perspektivische Darstellung eines erfindungsgemäßen Hülsenteils zur Aufnahme des Gewindeeinsatzes gemäß FIG. 2A;
FIG.3
   eine vereinfachte perspektivische Darstellung einer Gewindeeinsatz-Anordnung nach dem Stand der Technik.
FIG.1A zeigt
   eine perspektivische Darstellung eines erfindungsgemäßen Gewindeeinsatzes 1 mit vier strahlenförmig auswärts gerichteten fingerartigen Auflage-Randteilen 1-1,1-2,1-3,1-4.
   Die erfindungsgemäße Gewindeeinsatz-Anordnung besteht im wesentlichen aus einem hohlzylinderförmigen Hülsenteil 2 (FIG.1B) und einem darin angeordneten hohlzylinderförmigen Gewindeeinsatz 1 (FIG. 1A) mit Innengewinde I.
   Der Gewindeeinsatz 1 (FIG. 1A) hat an einer Öffnung vier nach auswärts weisende Auflage-Randteile 1-1,1-2,1-3 und 1-4, welche radialsymmetrisch angeordnet sind.
   Ein derartiger Gewindeeinsatz ist vorteilhaft herzustellen, z.B. durch Ausstanzen und Tiefziehen aus Bandmaterial und spanloser Gewindeformung.
   Die Auflage-Randteile Randteile 1-1,1-2,1-3 und 1-4 liegen in den Aussparungen 2-1,2-2,2-3,2-4 auf der Hülsenwandung auf
   (FIG.13).
FIG.2B zeigt
   eine perspektivische Darstellung eines erfindungsgemäßen Hülsenteils 2 zur Aufnahme des Gewindeeinsatzes gemäß FIG. 1A.
   An einer Öffnung des Hülsenteils 2 sind Aussparungen 2-1, 2-2, 2-3, 2-4 zur Aufnahme der Auflage-Randteile Randteile 1-1, 1-2, 1-3 und 1-4 des Gewindeeinsatzes 1 vorgesehen.
   Die Aussparungsbreite B jeder Auflage-Aussparung ist etwas größer als die Breite b eines Auflage-Randteils, so daß dieses im Bereich der Auflage-Aussparung begrenzt verdrehbar ist.
   Der Gewindeeinsatz 1 hat einen äußeren Durchmesser d, der etwas kleiner als der Innendurchmesser D der Hülse ist. Dadurch ist eine begrenzte seitliche Verscheibung des Gewindeeinsatzes innerhalb des Hülsenteils 2 in der Ebene möglich, in welcher die Auflageflächen der Hülse für die Auflage-Randteile liegen.
FIG. 1C zeigt
   eine perspektivische Darstellung einer Kappe 3 für das Hülsenteil 2 zur Abdeckung des Gewindeeinsatzes 1 mit den Auflage-Randteilen.
   Diese Kappe 3 wird nach Einführen des Gewindeeinsatzes 1 in das Hülsenteil 2 über der Hülsenöffnung angeordnet.
   Die Kappe 3 gewährleistet, daß der Gewindeeinsatz 1 nicht aus der Hülse 2 herausfallen kann und deckt zugleich den Bereich der Auflage-Aussparungen 2-1, 2-2, 2-3, 2-4 ab. Dadurch ist dieser Bereich geschützt, wenn die Gewinde-Einsatz-Anordnung mit einem Bauteil verklebt oder in diesem vergossen wird.
   Die Kappe 3 weist einen inneren Wulstrand 3-1 auf , welcher beim Aufzetzen der Kappe auf die Hülsenöffnung über einen Absatz 2-9 greift.
   Das Hülsenäußere weist Aussparungen 2-5, 2-6, ... und Versteifungen 2-8 zwischen dem oberen und unteren auswärts weisenden Hülsenrand auf. Diese Gestaltung ermöglicht ein verdrehfestes Vergießen der Gewindeeinsatz-Anordnung in einem Bauteil.
   Das Vergießen erfolgt vorzugsweise mit Kunststoff bzw. synthetischen Klebern.
   Die Gewindeverbindung erfolgt auf der der Kappe abgewandten Öffnung des Hülsenteils.
   Das Hülsenteil 2 ist vorzugsweise aus Kunststoff im Spritzgußverfahren hergestellt. Eine solche Herstellung ist gegenüber Metall-Hülsen einfach und kostengünstig. Kunststoffmaterial ermöglicht zudem ein geringeres Gewicht. Bei der erfindungsgemäßen Gewindeeinsatz-Anordnung kann die Anzahl der Auflage-Randteile des Gewindeeinsatzes auch 1 oder mehr als 2, also 3, (4), 5, ...etc betragen. Mehrere Auflage-Randteile sind vorteilhafterweise axialsymmetrisch abgeordnet. Als besonders vorteilhaft hat sich eine Gewindeeinsatz-Anordnung mit vier Auflage- Randteilen erwiesen.
FIG.2A zeigt
   eine perspektivische Darstellung eines erfindungsgemäßen Gewindeeinsatzes 4 mit nur einem auswärts gerichteten Auflage-Randteil 4-1, während
FIG.2B
   eine perspektivische Darstellung des dazugehörigen erfindungsgemäßen Hülsenteils 4' zur Aufnahme des Gewindeeinsatzes gemäß FIG. 2A zeigt.
   Bei einer solchen Ausführungsform ergibt sich eine besonders große Auflagefläche 4-1' für das Auflage-Randteil 4-1 des Gewindeeinsatzes.

## Patentansprüche

1. Gewindeeinsatz-Anordnung,
mit einem hohlzylinderförmigen Hülsenteil und einem darin angeordneten hohlzylinderförmigen Gewindeeinsatz mit Innengewinde ,
wobei an einer Öffnung des Gewindeeinsatzes auswärts weisende Auflage-Randteile angeordnet sind und
an einer Öffnung des Hülsenteils Auflage-Aussparungen zur Aufnahme der Auflage-Randteile vorgesehen sind und
wobei der Gewindeeinsatz mit seinen Auflage-Randteilen im Bereich der Auflage-Aussparungen verdrehbar ist und
der Gewindeeinsatz innerhalb des Hülsenteils seitlich verschiebbar ist,
dadurch gekennzeichnet, daß
mindestens drei Auflage-Randteile (1-1, 1-2, 1-3, 1-4) vorgesehen sind.

2. Anordnung nach Anspruch 1,
gekennzeichnet durch
vier Auflage-Randteile.

3. Anordnung nach Anspruch 1 oder 2,
dadurch gekennzeichnet, daß
die Auflage-Randteile fingerartig (1-1, 1-2, 1-3, 1-4) ausgeführt sind.

4. Anordnung nach einem der Ansprüche 1 bis 3,
dadurch gekennzeichnet, daß
die Auflage-Randteile((1-1, 1-2, 1-3, 1-4) axialsymmetrisch angeordnet sind.

5. Anordnung nach einem der Ansprüche 1-4,
dadurch gekennzeichnet, daß
jedem Auflage-Randteil (1-1, 1-2, 1-3, 1-4) eine Auflage-Aussparung (2-1, 2-2, 2-3, 2-4) zugeordnet ist.

6. Anordnung nach einem der Anspüche 1 bis 5,
gekennzeichnet durch
eine geradzahlige Anzahl von radialsymmetrisch angeordneten Randteilen (1-1, 1-2, 1-3, 1-4) , wobei diametral gegenüberliegende Auflage-Aussparungen (2-1,2-3;2-2, 2-4) einander fluchtende Seiten und Grundflächen aufweisen.

7. Gewindeeinsatz-Anordnung,
mit einem hohlzylinderförmigen Hülsenteil und einem darin angeordneten hohlzylinderförmigen Gewindeeinsatz mit Innengewinde,
wobei an einer Öffnung des Gewindeeinsatzes auswärts weisende Auflage-Randteile angeordnet sind und
an einer Öffnung des Hülsenteils Auflage-Aussparungen zur Aufnahme der Auflage-Randteile vorgesehen sind und
wobei der Gewindeeinsatz mit seinen Auflage-Randteilen im Bereich der Auflage-Aussparungen verdrehbar ist und
der Gewindeeinsatz innerhalb des Hülsenteils seitlich verschiebbar ist,
dadurch gekennzeichnet, daß
nur ein einziges Auflage-Randteil (4-1) vorsehen ist.

8. Anordnung nach Anspruch 7,
dadurch gekennzeichnet, daß
dieses Auflage-Randteil (4-1) sowie die Auflage-Aussparung (4-1') die Form eines Ringsegmentes hat.

9. Anordnung nach einem der Ansprüche 1 oder 7,
dadurch gekennzeichnet, daß
die äußere Hülsenteilwandung Aussparungen (2-5, 2-6, ...) (für ein verdrehfeste Verbindung mit einem Bauteil) aufweist.

10. Anordnung nach einem der Ansprüche 1-9,
gekennzeichnet durch
eine die Hülsenöffnung mit den Auflage-Aussparungen (2-1, 2-2, 2-3, 2-4; 4-1') abdeckende Kappe (3).

11. Anordnung nach Anspruch 10,
dadurch gekennzeichnet,
daß die Kappe (3) einen inneren Rand-Wulst (3-1) aufweist, der einen äußeren Hülsenabsatz (2-9) übergreift.

12. Anordnung nach einem der Ansprüche 1 bis 11,
dadurch gekennzeichnet, daß Hülse (2,4') aus Kunststoff ist.
